# EUROPÄISCHE PATENTSCHRIFT

(11) **EP 3 354 907 B1**
(45) Veröffentlichungstag und Bekanntmachung des Hinweises auf die Patenterteilung: **13.11.2019**
(21) Anmeldenummer: 17202224.6
(22) Anmeldetag: 17.11.2017
(51) Int. Cl.: F16B 5/02

(54) **RASTSCHEIBENSATZ**
NOTCHED DISC SET
ENSEMBLE DE BAGUES D'ARRÊT

(30) Priorität: 25.11.2016 DE 202016007250 U
(43) Veröffentlichungstag der Anmeldung: 01.08.2018
(73) Patentinhaber: Otto Ganter GmbH & Co. KG Normteilefabrik, 78120 Furtwangen (DE)
(72) Erfinder: Kienzler, Rudolf, 78120 Furtwangen (DE)
(74) Vertreter: Riebling, Peter

(56) Entgegenhaltungen:
- EP-A2- 1 470 996
- GB-A- 186 719
- GB-A- 261 823
- GB-A- 190 613 176
- GB-A- 191 225 524
- US-A- 5 295 727
- US-A1- 2006 006 707
- US-B1- 8 720 099

## Beschreibung

Gegenstand der Erfindung ist ein Rastscheibensatz nach dem Oberbegriff des Patentanspruches 1.

Ein derartiger Rastscheibensatz ist mit verschiedenen Konstruktionen des eigenen Anmelders bekannt geworden. Er besteht im Wesentlichen aus zwei spiegelsymmetrisch und identisch aufgebauten Rastscheiben, die im Bereich ihrer Verzahnung axial miteinander verbunden werden und erst dann gegeneinander verdrehbar und festsetzbar sind, wenn die eine Scheibe gegen die andere verdreht wird, wobei die eine Rastscheibe außer Eingriff mit der anderen Rastscheibe gebracht wird.

Um einen rastenden Eingriff und eine Blockierung der Verdrehung zu erreichen, ist im Verbindungsbereich zwischen den Rastscheiben eine Druckfeder angeordnet, weiche die beiden Rastscheiben voneinander abdrückt, so dass die beiden ineinander greifenden Verzahnungen der beiden Rastscheiben nur dann in Eingriff sind, wenn die Druckfeder vorgespannt sind.

Ein derartiger Rastscheibensatz wird beispielsweise für die gelenkige Verbindung von Stangen verwendet, die schwenkbar und feststellbar zueinander angeordnet sein müssen, wie z. B. bei Kinderwagengestellen, bei Rundrohrgestellen. Die Erfindung betrifft auch Rastscheiben für die Abstützung der Kopfgestelle bei Krankenhausbetten, die in der Regel aus Rohrgestellen bestehen und bei denen das Kopfgestell schwenkbar und feststellbar am Grundgestell angeordnet ist.

Der Nachteil der bisherigen Rastscheibensätze war, dass man jedem Rastscheibensatz eine eigene Montagevorrichtung zuordnen musste, denn die Befestigung des Rastscheibensatzes an dem entsprechenden Bauteil war mit hohen Schwierigkeiten verbunden.

Eine erste Schwierigkeit war, dass es bisher nur bekannt war, den Rastscheibensatz mit einer mittigen zentrischen und rund profilierten Ausnehmung zu versehen, die als Durchgangsbohrung ausgebildet war.

Nachteil eines solchen Rastscheibensatzes mit einer zentrischen mittigen und rotationssymmetrischen Durchgangsbohrung ist, dass verschiedene zusätzliche Befestigungsteile benötigt werden, um einen solchen Rastscheibensatz an einem Bauteil zu befestigen.

Man braucht hierzu mehrere - der Befestigung angepasste - Ausführungen, wobei z. B. eine erste Ausführung ein zentrisches Gewinde in der Durchgangsbohrung voraussetzt, was den Anwendungszweck eines solchen Rastscheibensatzes einschränkt.

Eine zweite Ausführungsform ist eine Ausführung, bei der ebenfalls eine zentrische Durchgangsbohrung vorhanden ist, bei der aber die eine Rastscheibe mit Hilfe von stirnseitig angebrachten Bohrungen an zugeordneten bauteilseitigen, gegenüberliegenden Stiften verankert ist. Auch hier besteht der Nachteil, dass eine besondere Verankerung notwendig ist und eine universelle Befestigung nicht gegeben ist.

Weiterer Nachteil beim Stand der Technik ist, dass wenn z. B. ein verstellbarer Klemmhebel oder dergleichen durch die Rastscheibenanordnung hindurchgeführt wird, eine zusätzliche Zentrierung verwendet werden muss, um die beiden Rastscheiben zentrisch miteinander zu verbinden und zueinander zu zentrieren.

Der Erfindung liegt
deshalb die Aufgabe zugrunde, einen Rastscheibensatz der eingangs genannten Art so weiterzubilden, dass mit einer Minimierung des Aufwandes bei der Ausbildung von Rastscheiben eine Vielzahl von Befestigungsmöglichkeiten gewährleistet ist.

Zur Lösung der gestellten Aufgabe ist die Erfindung durch die technische Lehre des Anspruches 1 gekennzeichnet.

Mit der gegebenen technischen Lehre ergibt sich der Vorteil, dass ein universell verwendbarer Rastscheibensatz an unterschiedlichen Bauteilen ohne großen Aufwand montiert werden kann.

Merkmal der Erfindung ist, dass nunmehr der Rastscheibensatz, der aus identischen, spiegelsymmetrisch zueinander angeordneten Rastscheiben besteht, eine an sich bekannte mittige, zentrische und zylindrische Durchgangsbohrung aufweist, dass aber die Ausgangsseite der Durchgangsbohrung als Innenmitnahmeprofil ausgebildet ist, um so einen drehfesten Anschluss eines Bauteils an eine solche Rastscheibe zu erbringen.

Die Ausbildung als Innenmitnahmeprofil am axialen Ausgang der jeweiligen Durchgangsbohrung hat den Vorteil, dass nunmehr in diesem Bereich eine drehfeste Montage gegeben ist, weil z. B. als einziges Befestigungsmittel eine sogenannte Zentrierbuchse verwendet wird, die nunmehr drehfest mit ihrem Kopfteil in diesen Innenmitnahmeprofil verankerbar ist.

In einer bevorzugten Ausgestaltung der Erfindung ist vorgesehen, dass das Innenmitnahmeprofil als Innensechskant ausgebildet ist, um so an die Formgebung des Kopfteils der Zentrierbuchse angepasst zu sein, die ebenfalls als Sechskantkopf ausgebildet ist.

Hierauf ist die Erfindung jedoch nicht beschränkt. In einer anderen Ausgestaltung kann das Innenmitnahmeprofil auch als Ovalausnehmung, als Mehrkantausnehmung, Innensechsrung, als Polygonzug oder dergleichen ausgebildet sein, um so eine Formschlussverbindung mit dem an diese Formgebung angepassten Kopfteil der Zentrierbuchse zu erreichen.

In einer bevorzugten Ausgestaltung der vorliegenden Erfindung besteht die Zentrierbuchse aus einem einfachen Kopfteil, welches im Durchmesser vergrößert ist und dessen Außendurchmesser etwa dem Innendurchmesser der Innenmitnahmeprofiltbohrung angepasst ist, so dass das Kopfteil etwa bündig in dem Innenmitnahmeprofil eingesetzt werden kann und etwa mit der Außenfläche der Rastscheibe d.h. der Deckfläche, abschneidet.

Die Zentrierbuchse besteht im Wesentlichen aus dem im Durchmesser vergrößerten Kopfteil, dessen Außenfläche an den Innenmitnahmeprofil im Bereich der Durchgangsbohrung der jeweiligen Rastscheibe angepasst ist und ferner aus einem sich werkstoffeinstückig daran anschließenden Hülsenteil 12, welches bevorzugt zylindrisch ausgebildet ist.

Hierauf ist die Erfindung beschränkt. Das Hülsenteil kann auch statt einer zylindrischen Formgebung als Mehrkanthülsenteil ausgebildet sein, oder ein anderes Mitnahmeprofil aufweisen.

Bei der Zentrierbuchse ist es außerdem noch wesentlich, dass die Innenausnehmung der Zentrierbuchse in verschiedenartiger Weise ausgebildet sein kann. Sie kann glatt und durchgehend ausgebildet sein und so eine Durchgangsbohrung bilden.

Sie kann jedoch auch ein Innengewinde aufweisen, um so eine Schraubbefestigung mit einem zugeordneten Gewindebolzen zu ermöglichen.

In einer anderen Ausgestaltung kann es noch zusätzlich vorgesehen sein, dass die Zentrierbuchse noch einen Zentrieransatz aufweist, der axial über die Vorderseite des Kopfteils d.h. die Deckfläche einer Rastscheibe hinaussteht und die äußere Begrenzung des Kopfteils bildet.

Dieser axiale Zentrieransatz hat den Vorteil, dass man die Positionierung des gesamten Rastscheibensatzes in einer zugeordneten Aufnahmebohrung in einem Bauteil erreichen kann.

Die Erfindung ist nicht auf die Ausbildung einer Zentrierbuchse mit einem Mitnahmeprofilkopfteil und einem sich rotationssymmetrisch zylindrisch daran anschließenden Hülsenteil beschränkt.

In einer anderen Ausgestaltung der Erfindung kann es vorgesehen sein, dass der Kopfteil rundzylindrisch ausgebildet ist und deshalb keine Verdrehsicherung im Bereich des Mitnahmeprofils des Rastscheibensatzes befindet und dass stattdessen das Hülsenteil selbst als Mitnahmeprofil ausgebildet ist und in einer daran angepassten Durchgangsbohrung des Rastscheibensatzes verdrehgesichert gelagert ist.

Allen Ausführungsformen ist gemeinsam, dass an den gegenüberliegenden Stellen der jeweiligen Rastscheibe, nämlich im Bereich der Deckfläche mindestens zwei einander gegenüberliegende Positionierungshilfen, wie z.B. Stiftbohrungen vorhanden sind, deren Zuordnung zu der Verzahnung und somit zur Ausrichtung der Rastscheibe zueinander wichtig ist.

Jedoch ist die vorliegende Erfindung nicht auf Stiftbohrungen zur Ausrichtung und als Positionierungshilfe beschränkt. Auch andere Hilfsmittel, wie vorstehende Nasen, eine Aussparung für Nutensteine, sowie an dem Außendurchmesser der Rastscheiben befindliche Schlüsselflächen werden mit der vorliegenden Erfindung beansprucht.

Die Stiftbohrungen dienen zur Aufnahme von Stiften, die in einem nicht näher dargestellten Bauteil verankert sind, um zu gewährleisten, dass die jeweilige Rastscheibe in einer genau definierten Drehlage auf den gehäuseseitigen Stiften aufgebracht wird. Die Befestigung auf den Stiften kann verschieden sein.

Die Rastscheibe kann auf der Anschlussfläche aufgeklebt, aufgeschweißt, angeschraubt oder in anderer Weise fest befestigt sein.

Durch die durch die Stiftbohrungen durchgeführten Stifte können Bauelemente zueinander im definierten Winkel verstellt und formschlüssig arretiert werden, da eine weitere, mit einem weiteren Bauelement verbundene, Rastplatte auf der arretierten Rastplatte aufgelegt und mit dieser verbunden wird.

Die Winkellage der Positionierungshilfe (z.B. Stiftbohrungen) zur Verzahnung ist auf Umschlag gleich. Dies bedeutet, dass es keine linke und rechte Rastscheibe gibt, sondern dass die Rastscheiben genau identisch ausgebildet sind und demzufolge einen spiegelsymmetrischen Aufbau ergeben.

Die Erfindung zeichnet sich also dadurch aus, dass drei verschiedene Ausführungsformen vorhanden sind, nämlich zwei einander zugeordnete Rastscheiben, die eine Rastscheibe bilden, wobei eine zentrische Durchgangsbohrung als Durchloch vorhanden ist, ohne dass eine Gewindebuchse verwendet werden muss.

Die zweite Ausführungsform bezieht sich darauf, dass derselbe Rastscheibensatz in der Durchgangsbohrung eine Gewindebuchse mit Innengewinde oder mit glattem Durchgangsloch aufweist und die dritte Ausführungsform zeichnet sich dadurch aus, dass der Rastscheibensatz in seiner Durchgangsbohrung eine Gewindebohrung mit glattem Durchgangsloch oder mit Gewindeinnenbohrung und somit einem einseitigen axialen Zentrieransatz aufweist.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von einer, lediglich einen Ausführungsweg darstellenden Zeichnung näher erläutert. Hierbei gehen aus der Zeichnung und ihrer Beschreibung weitere erfindungswesentliche Merkmale und Vorteile der Erfindung hervor.

Es zeigen:
- Figur 1:: perspektivische Seitenansicht einer ersten Ausführungsform eines Rastscheibensatzes
- Figur 2:: die Seitenansicht nach Figur 1
- Figur 3:: der Schnitt durch die Ausführungsform nach Figur 1
- Figur 4:: die Stirnansicht der Ausführung
- Figur 5:: ein Schnitt in einer anderen Schnittrichtung
- Figur 5a und 5b:: Ansicht einer Druckfeder
- Figur 6:: die perspektivische Ansicht einer Rastscheibe von der Verzahnungsseite her
- Figur 7:: die Stirnansicht der Rastscheibe von der Stirnseite her
- Figur 8:: ein Schnitt durch die Rastscheibe nach Figur 6 und Figur 7
- Figur 9:: die Seitenansicht der Rastscheibe
- Figur 10:: die Stirnansicht der Rastscheibe in der Art der Darstellung nach Figur 6
- Figur 11:: die vergrößerte Ansicht der Verzahnung
- Figur 12:: die Ausbildung der Verzahnung mit Darstellung der konischen Zahnform, die sich von radial innen nach radial außen in axialer Richtung erweitert
- Figur 13:: die Stirnansicht der Anordnung
- Figur 14:: schematisiert die Darstellung des Verzahnungseingriffes
- Figur 15:: eine perspektivische Darstellung durch eine zweite Ausführungsform eines Rastscheibensatzes mit einer darin aufgenommenen Zentrierbuchse
- Figur 15a:: der Schnitt durch die Anordnung nach Figur 15
- Figur 16:: ein in anderer Schnittrichtung gerichteter Schnitt durch die Anordnung nach Figur 15
- Figur 17:: der Schnitt durch eine Zentrierbuchse in einer ersten Ausführungsform
- Figur 18:: die perspektivische Ansicht der Zentrierbuchse nach Figur 17
- Figur 19:: eine perspektivische Ansicht einer zweiten Ausführungsform eines Rastscheibensatzes
- Figur 20:: der Schnitt durch die Ausführung nach Figur 19
- Figur 21:: der Schnitt durch die Ausführungsform nach Figur 19 und 20
- Figur 22:: ein in anderer Schnittrichtung gerichteter Schnitt
- Figur 23:: der Schnitt durch eine zweite Ausführungsform einer Zentrierbuchse mit einem axialen Ansatz
- Figur 24:: der Schnitt durch die Zentrierbuchse nach Figur 23

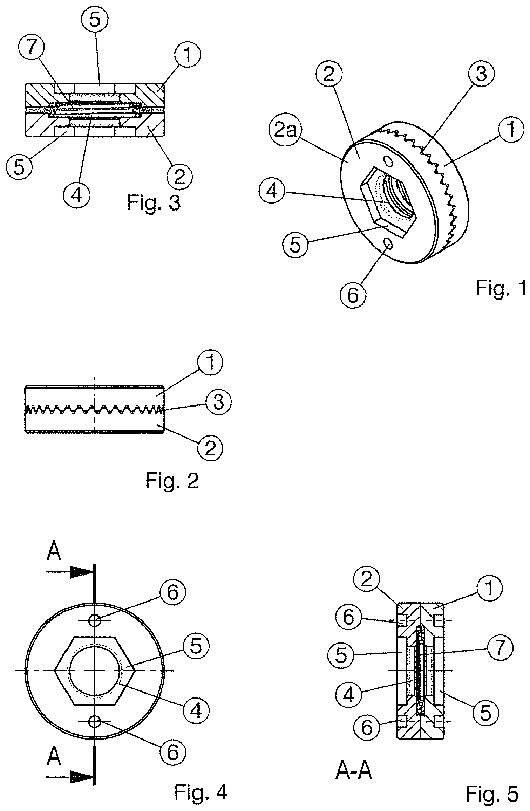

In der ersten Ausführungsform nach den Figuren 1 bis 13 ist allgemein ein Rastscheibensatz dargestellt, der aus zwei identischen und spiegelsymmetrisch zueinander stehenden Rastscheiben 1, 2 gebildet ist, wobei jede Rastscheibe genau identisch ausgebildet ist, so dass es an und für sich für die spätere Beschreibung genügt, lediglich den Aufbau einer einzigen Rastscheibe zu beschreiben, weil die andere Rastscheibe genau identisch ausgebildet ist.

Jede der Rastscheiben 1, 2 weist eine zugeordnete Verzahnung 3 auf und die einander zugeordneten Verzahnungen der Rastscheiben 1, 2 greifen ineinander im verrasteten Zustand, wie das in Figur 1 dargestellt ist. Demnach besteht jede Rastscheibe 1 aus einer Deckfläche 2a, in deren Bereich zwei einander gegenüberliegende und bezüglich der Verzahnung genau ausgerichtete Positionierungshilfen 6, hier gezeigt als Stiftbohrungen, vorgesehen sind.

Die Stiftbohrungen dienen zur Aufnahme von Stiften, die in einem nicht näher dargestellten Bauteil verankert sind, um zu gewährleisten, dass die jeweilige Rastscheibe 2 in einer genau definierten Drehlage auf den gehäuseseitigen Stiften aufgebracht wird. Die Befestigung auf den Stiften kann verschieden sein. Die Rastscheibe kann auf der Anschlussfläche aufgeklebt, aufgeschweißt, angeschraubt oder in anderer Weise fest befestigt sein.

Die Positionierungshilfen 6 dienen also nur zur Definition der Drehlage der jeweiligen Rastscheibe 2, die auf dem nicht näher dargestellten Bauteil befestigt wird.

Jede Rastscheibe weist eine Durchgangsbohrung 4 auf, die im gezeigten Ausführungsbeispiel zylindrisch ausgebildet ist, so dass sich bei dem Zusammenfügen der Rastscheiben 1, 2 eine durchgehende zentrische Durchgangsbohrung 4 ergibt, die in ihrem Innenumfang glatt zylindrisch ausgebildet ist.

Wichtig bei der Erfindung ist nun, dass die Durchgangsbohrung 4 in axialer Richtung nach außen im Bereich der Deckfläche 2a jeder Rastscheibe 1, 2 als Innenmitnahmeprofil 5 im Durchmesser erweitert ist, um so zu gewährleisten, dass die Durchgangsbohrung 4 eine bestimmte Drehlagenfixierung eines dort verankerten Bauteils ermöglicht.

Dies ist neu, denn beim Stand der Technik war nur lediglich eine zylindrische Durchgangsbohrung 4 vorhanden, ohne dem an beiden Seiten spiegelsymmetrisch vorhandenen, die Durchgangsbohrung 4 radial erweiternden Innenmitnahmeprofil 5.

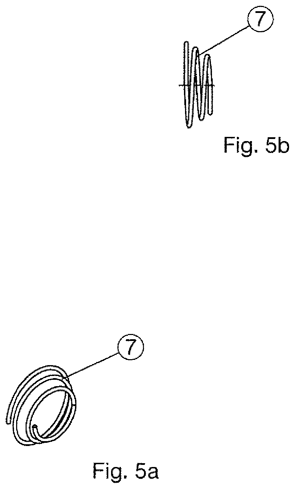

Im Verbindungsbereich zwischen den beiden Rastscheiben 1, 2 ist noch eine Druckfeder 7 angeordnet, die bevorzugt gemäß Figuren 5a und 5b konisch ausgebildet ist.

Vorteil der konischen Ausbildung ist, dass wenn die Druckfeder zusammengepresst wird, sich die Federwindungen dann so ineinander verschachteln, dass nur noch die Dicke einer einzigen Federwindung die Begrenzung für das Zusammenpressmaß ergibt.

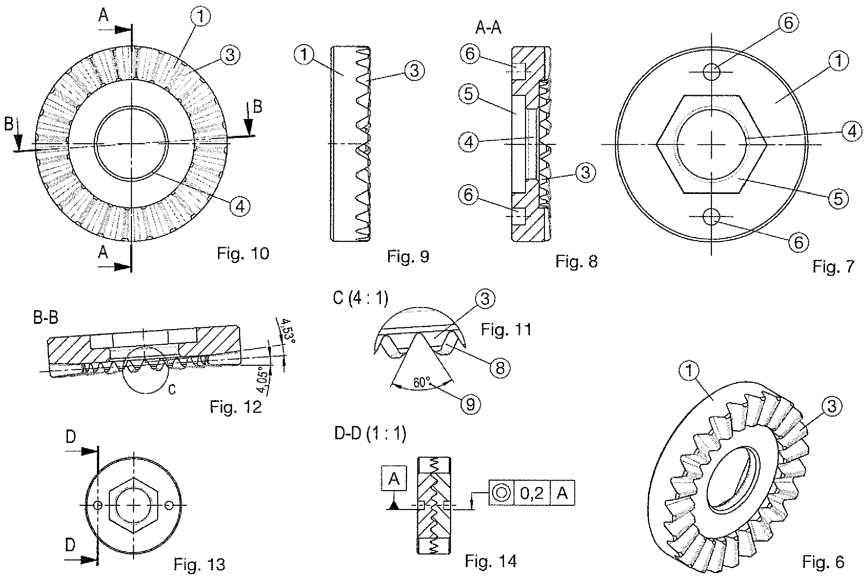

In den Figuren 6 bis 14 sind die Einzelheiten des Aufbaus jeder Rastscheibe 1, 2 dargestellt.

Aus Figur 12 ergibt sich beispielsweise, dass die Zahnflanken 8 sich konisch radial nach außen erweitern, wobei mit der gestrichelten Linie das Mittelmaß der Verzahnung angegeben ist und mit der innen liegenden Linie ein Winkel von 4,53° angegeben ist, um den der Zahngrund konisch ausgebildet ist und mit dem anderen Winkel von 4,05° die Zahnspitze sich konisch nach außen erweitert.

Damit wird ein leichteres Verrasten der Rastscheiben 1, 2 gewährleistet und es erfolgt eine Selbstzentrierung, insbesondere auch deshalb, weil die Zahnflanken 8 in an sich bekannter Weise konisch sind und einen konischen Zahnwinkel 9 von bevorzugt 60° bilden.

In einer ersten Ausführungsform der vorliegenden Erfindung ist das Vorhandensein einer Zentrierbuchse nicht vorausgesetzt. Die Befestigung des Rastscheibensatzes nach den Figuren 1 bis 14 erfolgt dergestalt, dass durch die zentrale Durchgangsbohrung 4 eine Durchgangsschraube oder ein anderes Bauteil hindurchgesteckt wird und dann an der Deckfläche 2a eine Rastscheibe mit einem Befestigungsmittel festgelegt wird, wie z. B. einer Kontermutter, einem Schraubenkopf oder dergleichen.

Im Übrigen gelten für die Zeichnungen nach Figuren 6 bis 14 für die gleichen Teile die gleichen Bezugszeichen.

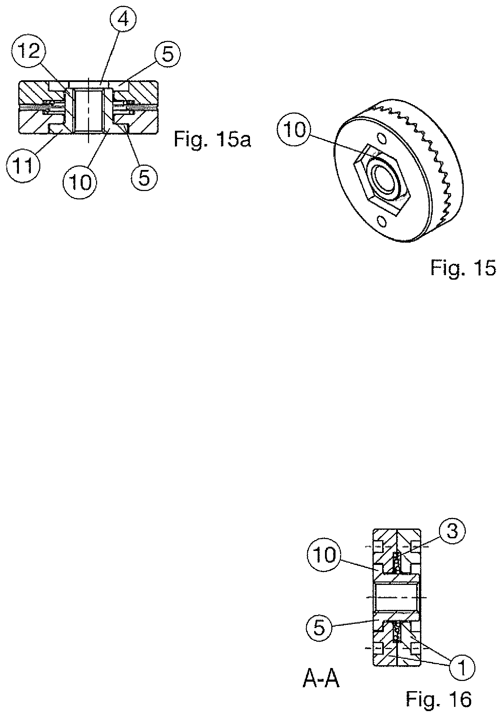

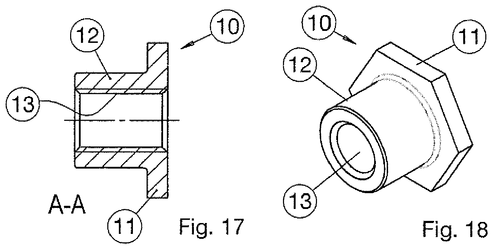

In dem Ausführungsbeispiel nach den Figuren 15 bis 18 wird als zweite Ausführungsform dargestellt, dass bei den identisch ausgebildeten Rastscheiben 1, 2 mit allen vorher beschriebenen Merkmalen noch zusätzlich eine Zentrierbuchse 10 verwendet wird, die gemäß Figuren 17 und 18 im Wesentlichen aus einem grundzylindrischen Hülsenteil 12 besteht, an dem werkstoffeinstückig ein mehrkantiges Kopfteil 11 angeformt ist.

Im gezeigten Ausführungsbeispiel ist das Kopfteil 11 an seinem Außenumfang als Sechskant ausgebildet. Hierauf ist die Erfindung nicht beschränkt. Es ist nur gefordert, dass die Formgebung des Kopfteils 11 an die Formgebung des Mitnahmeprofils 5 angepasst ist, um so einen formschlüssigen Einsatz des Kopfteils 11 in den Mitnahmeprofil 5 zu gewährleisten. Damit soll eine Verdrehsicherung der Zentrierbuchse 10 in der Durchgangsbohrung 4 gewährleistet werden.

In dem gezeigten Ausführungsbeispiel ist vorgesehen, dass die Innenbohrung der Zentrierbuchse 10 mit einem Innengewinde 13 versehen ist.

In einer anderen Ausgestaltung kann jedoch das Innengewinde 13 auch entfallen.

Vorteil der Verwendung einer Zentrierbuchse 10 ist, dass wenn die Rastscheiben 1, 2 voneinander getrennt werden, die radiale Position der Verzahnungen der Rastscheiben 1, 2, zueinander erhalten bleibt und somit die Rastscheiben 1, 2 zueinander zentriert werden.

Die Zentrierbuchse ist also lose in der Durchgangsbohrung 4 verdrehsichert und formschlüssig gehalten.

Damit wird also festgelegt, dass die beiden Rastscheiben 1, 2, wenn sie außer Verzahnungseingriff gebracht werden, kein radiales Spiel zueinander erhalten, weil sie durch die Zentrierbuchse noch in axialer Richtung zentriert werden und ein radiales Ausweichen nicht möglich ist.

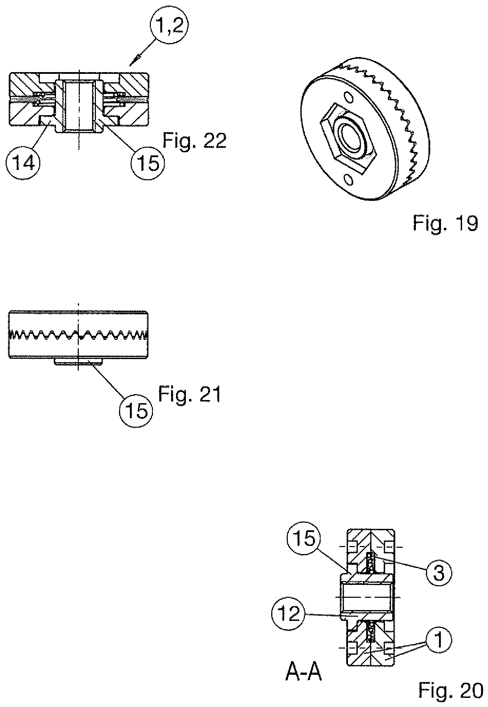

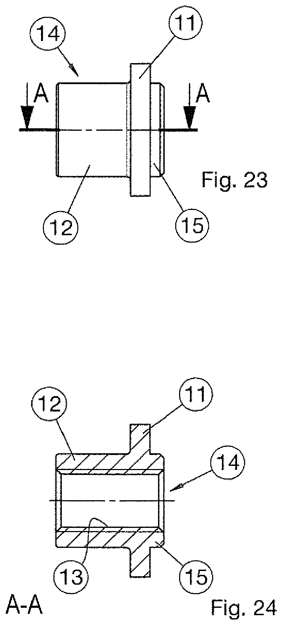

In den Figuren 20 bis 24 ist ein weiteres Ausführungsbeispiel der erfindungsgemäßen Anordnung dargestellt, bei der lediglich im Vergleich zu dem vorher genannten Ausführungsbeispiel nach den Figuren 15 bis 18 geändert wurde, dass bei an und für sich gleichem Aufbau eine andere Zentrierbuchse 14 verwendet wird.

Es gelten demzufolge für die gleichen Teile die gleichen Erläuterungen. Es liegt auch der gleiche Aufbau vor, nur wurde eine Zentrierbuchse 14 vorgeschlagen, die an ihrem Kopfteil 11 noch einen zusätzlichen, axial vorstehenden Zentrieransatz 15 aufweist.

Damit wird gewährleistet, dass das Rastscheibenpaar auf einem nicht näher dargestellten Bauteil in besonders günstiger Weise zentriert werden kann, weil nur vorausgesetzt wird, dass auf diesem Bauteil eine entsprechende Aufnahmebohrung mit dem Innendurchmesser vorhanden ist, der dem Außendurchmesser des axialen Zentrieransatzes 15 entspricht, so dass damit der gesamte Rastscheibensatz mit der dort aufgenommenen Zentrierbuchse 14 auf diesem Bauteil leicht zentriert und positioniert werden kann.

### Zeichnungslegende

- 1: Rastscheibe
- 2: Rastscheibe; 2a Deckfläche
- 3: Verzahnung
- 4: Durchgangsbohrung
- 5: Innenmitnahmeprofil
- 6: Positionierungshilfe
- 7: Druckfeder (konisch)
- 8: Zahnflanke
- 9: Zahnwinkel
- 10: Zentrierbuchse (ohne Ansatz)
- 11: Kopfteil
- 12: Hülsenteil
- 13: Innengewinde
- 14: Zentrierbuchse (mit Ansatz)
- 15: Zentrieransatz

## Patentansprüche

1. Rastscheibensatz bestehend aus zwei Rastscheiben (1, 2) mit jeweils einer außenseitigen Deckfläche (2a), wobei die Rastscheiben (1, 2) mittels gegenüberliegenden ineinander greifenden Verzahnungen (3), an den Innenseiten miteinander drehfest verbindbar sind, und axial gegeneinander bewegbar sind, wobei jeweils eine mittige, gegenüber der anderen Rastscheibe fluchtende zylindrische Durchgangsbohrung (4) die beiden Rastscheiben (1, 2) durchgreift, **dadurch gekennzeichnet, dass** an mindestens einer Ausgangsseite der Durchgangsbohrung (4) an der Deckfläche (2a) der jeweiligen Rastscheibe (1, 2) die Durchgangsbohrung (4) im Durchmesser vergrößert und als Innenmitnahmeprofil (5) ausgebildet ist, und dass in das Innenmitnahmeprofil (5) eine Zentrierbuchse (10, 14) drehfest zum Eingriff bringbar ist, die aus einem im Durchmesser vergrößerten MitnahmeprofilKopfteil (11) besteht, dessen Außendurchmesser etwa dem Innendurchmesser des Innenmitnahmeprofils (5) der mindestens einen Rastscheibe (1, 2) angepasst ist und ferner aus einem daran werkstoffeinstückig anschließenden, in der Durchgangsbohrung (4) einsetzbaren zylindrischen Hülsenteil (12) besteht.

2. Rastscheibensatz bestehend aus zwei Rastscheiben (1, 2) mit jeweils einer außenseitigen Deckfläche (2a), wobei die Rastscheiben mittels gegenüberliegenden ineinander greifenden Verzahnungen (3) an den Innenseiten miteinander drehfest verbindbar sind, und axial gegeneinander bewegbar sind, wobei jeweils eine mittige gegenüber der anderen Rastscheibe fluchtende Durchgangsbohrung (4) die beiden Rastscheiben durchgreift, **dadurch gekennzeichnet, dass** die Ausgangsseite der Durchgangsbohrung (4) an der Deckfläche (2a) im Durchmesser vergrößert ausgebildet ist, und die übrige Durchgangsbohrung als Innenmitnahmeprofil ausgebildet ist, um einen drehfesten Eingriff einer Zentrierbuchse (10, 14) an eine solche Rastscheibe (1, 2) zu erbringen, und dass die Zentrierbuchse (10, 14) aus einem im Durchmesser vergrößerten Kopfteil (11) besteht, dessen Außendurchmesser etwa dem Innendurchmesser der Ausgangsseite der Durchgangsbohrung (4) angepasst ist und in diese einsetzbar ist und ferner aus einem daran werkstoffeinstückig anschließenden Hülsenteil (12) besteht, welches als Mitnahmeprofil ausgebildet ist, der in die daran angepasste profilierte Durchgangsbohrung des Rastscheibensatzes verdrehgesichert zum Eingriff bringbar ist.

3. Rastscheibensatz nach Anspruch 1 oder 2, **dadurch gekennzeichnet, dass** die Zentrierbuchse (10) mit der Deckfläche (2a) der Rastscheibe (1, 2) bündig ist.

4. Rastscheibensatz nach einem der Ansprüche 1 bis 3, **dadurch gekennzeichnet, dass** die Zentrierbuchse (14) einen Zentrieransatz aufweist, der axial über die Deckfläche (2a) der Rastscheibe (1, 2) hinaussteht.

5. Rastscheibensatz nach einem der Ansprüche 1 bis 4, **dadurch gekennzeichnet, dass** mindestens eine Druckfeder (7) im Verbindungsbereich zwischen den Rastscheiben (1, 2) angeordnet ist.

6. Rastscheibensatz nach einem der Ansprüche 1 bis 5, **dadurch gekennzeichnet, dass** in den gegenüberliegenden Deckflächen (2a) der jeweiligen Rastscheibe mindestens zwei einander gegenüberliegende Positionierungshilfen (6) vorhanden sind.

7. Rastscheibensatz nach einem der Ansprüche 1 bis 6, **dadurch gekennzeichnet, dass** die Zentrierbuchse (10, 14) ein Innengewinde (13) aufweist.

8. Rastscheibensatz nach einem der Ansprüche 1 bis 6, **dadurch gekennzeichnet, dass** die Zentrierbuchse (10, 14) glatt durchgängig ist.

## Claims

1. Notched disc set consisting of two notched discs (1, 2) having respectively an outer-side cover surface (2a), wherein the notched discs (1, 2) are connectable to one another to be resistant to rotation on the inner sides by means of opposing toothed wheels (3) gripping into one another, and are movable axially against one another, wherein respectively a central cylindrical passage bore (4) aligning opposite the other notched disc grips through the two locking discs (1, 2), **characterised in that** the passage bore (4) is increased in diameter at least at one exit side of the passage bore (4) on the cover surface (2a) of the respective notched disc (1, 2) and is formed as an inner driving profile (5), and **in that** a centring bush (10, 14), which consists of a driving profile head part (11) increased in diameter, the external diameter of which is adapted approximately to the internal diameter of the inner driving profile (5) of the at least one notched disc (1, 2) and furthermore consists of a cylindrical sleeve part (12) connecting thereto in material-integral manner and is insertable in the passage bore (4), is engageable into the inner driving profile (5) to be resistant to rotation.

2. Notched disc set consisting of two notched discs (1, 2) having respectively an outer-side cover surface (2a), wherein the notched discs are connectable to one another to be resistant to rotation on the inner sides by means of opposing toothed wheels (3) gripping into one another, and are movable axially against one another, wherein respectively a central passage bore (4) aligning opposite the other notched disc grips through the two notched discs, **characterised in that** the exit side of the passage bore (4) on the cover surface (2a) is formed to be increased in diameter, and the remaining passage bore is formed as an inner driving profile in order to produce rotation-resistant engagement of a centring bush (10, 14) on such a notched disc (1, 2), and **in that** the centring bush (10, 14) consists of a head part (11) increased in diameter, the external diameter of which is adapted approximately to the internal diameter of the exit side of the passage bore (4) and is insertable into the latter and furthermore consists of a sleeve part (12) connecting thereto in material-integral manner and which is formed as a driving profile which is engageable into the profiled passage bore of the notched disc set adapted thereto in a manner which is secured against rotation.

3. Notched disc set according to claim 1 or 2, **characterised in that** the centring bush (10) is flush with the cover surface (2a) of the notched disc (1, 2).

4. Notched disc set according to one of claims 1 to 3, **characterised in that** the centring bush (14) has a centring shoulder which projects axially beyond the cover surface (2a) of the notched disc (1, 2).

5. Notched disc set according to one of claims 1 to 4, **characterised in that** at least one compression spring (7) is arranged in the connecting region between the notched discs (1, 2).

6. Notched disc set according to one of claims 1 to 5, **characterised in that** at least two positioning aids (6) opposite one another are present in the opposing cover surfaces (2a) of the respective notched disc.

7. Notched disc set according to one of claims 1 to 6, **characterised in that** the centring bush (10, 14) has an internal thread (13).

8. Notched disc set according to one of claims 1 to 6, **characterised in that** the centring bush (10, 14) is smooth throughout.

## Revendications

1. Ensemble de bagues d'arrêt composé de deux bagues d'arrêt (1, 2) avec chacune une surface de recouvrement côté extérieur (2a), dans lequel les bagues d'arrêt (1, 2) sont aptes à être reliées l'une à l'autre, fixes en rotation, sur leur côté intérieur à l'aide de dentures opposées (3) en prise, et sont mobiles axialement l'une par rapport à l'autre, dans lequel un trou traversant cylindrique central (4) dans l'alignement de l'autre bague d'arrêt traverse les deux bagues d'arrêt (1, 2), **caractérisé en ce que** sur au moins un côté de sortie du trou traversant (4), sur la surface de recouvrement (2a) de la bague d'arrêt respective (1, 2), le trou traversant (4) est pourvu d'un diamètre élargi et d'un profil d'entraînement intérieur (5), et **en ce que** une douille de centrage (10, 14) est apte à venir en prise, fixe en rotation, dans le profil d'entraînement intérieur (5), laquelle douille se compose d'une partie tête (11) à diamètre élargi dont le diamètre extérieur est à peu près adapté au diamètre intérieur du profil d'entraînement intérieur (5) de la au moins une bague d'arrêt (1, 2), et également d'une partie manchon (12) cylindrique qui lui fait suite, d'une seule pièce, et qui est apte à être insérée dans le trou traversant (4).

2. Ensemble de bagues d'arrêt composé de deux bagues d'arrêt (1, 2) avec chacune une surface de recouvrement côté extérieur (2a), dans lequel les bagues d'arrêt sont aptes à être reliées l'une à l'autre, fixes en rotation, sur leur côté intérieur à l'aide de dentures opposées (3) en prise, et sont mobiles axialement l'une par rapport à l'autre, dans lequel un trou traversant cylindrique central (4) dans l'alignement de l'autre bague d'arrêt traverse les deux bagues d'arrêt, **caractérisé en ce que** le côté de sortie du trou traversant (4) sur la surface de recouvrement (2a) est pourvu d'un diamètre élargi, et le reste du trou traversant est pourvu d'un profil d'entraînement intérieur pour produire une prise fixe en rotation d'une douille de centrage (10, 14) contre une telle bague d'arrêt (1, 2), et **en ce que** la douille de centrage (10, 14) se compose d'une partie tête (11) à diamètre élargi dont le diamètre extérieur est à peu près adapté au diamètre intérieur du côté de sortie du trou traversant (4) et est apte à être insérée dans celui-ci, et également d'une partie manchon (12) qui lui fait suite, d'une seule pièce, et qui est formée comme un profil d'entraînement qui est apte à venir en prise, bloqué en rotation, dans le trou traversant profilé, adapté audit profil d'entraînement, de l'ensemble de bagues d'arrêt.

3. Ensemble de bagues d'arrêt selon la revendication 1 ou 2, **caractérisé en ce que** la douille de centrage (10) forme une surface plane avec la surface de recouvrement (2a) de la bague d'arrêt (1, 2).

4. Ensemble de bagues d'arrêt selon l'une des revendications 1 à 3, **caractérisé en ce que** la douille de centrage (14) présente une saillie de centrage qui dépasse axialement de la surface de recouvrement (2a) de la bague d'arrêt (1, 2).

5. Ensemble de bagues d'arrêt selon l'une des revendications 1 à 4, **caractérisé en ce qu'**au moins un ressort de compression (7) est disposé dans la zone de liaison entre les bagues d'arrêt (1, 2).

6. Ensemble de bagues d'arrêt selon l'une des revendications 1 à 5, **caractérisé en ce qu'**il y a dans les surfaces de recouvrement opposées (2a) de chaque bague d'arrêt au moins deux éléments auxiliaires de positionnement (6) opposés.

7. Ensemble de bagues d'arrêt selon l'une des revendications 1 à 6, **caractérisé en ce que** le manchon de centrage (10, 14) présente un filetage intérieur (13).

8. Ensemble de bagues d'arrêt selon l'une des revendications 1 à 6, **caractérisé en ce que** le manchon de centrage (10, 14) est lisse et traversant.
